# EUROPEAN PATENT SPECIFICATION

(11) **EP 1 515 903 B1**
(45) Date of publication and mention of the grant of the patent: **14.06.2006**
(21) Application number: 03732249.2
(22) Date of filing: 20.06.2003
(51) Int. Cl.: B65D 90/02, B65D 81/38

(54) **A THERMALLY INSULATED CONTAINER AND USE THEREOF**
WÄRMEISOLIERTER BEHÄLTER UND VERWENDUNG DESSELBEN
CONTENANT A ISOLATION THERMIQUE ET SON UTILISATION

(30) Priority: 21.06.2002 DK 200200958
(43) Date of publication of application: 23.03.2005
(73) Proprietor: Marsk Container Industri AS, 6360 Tinglev (DK)
(72) Inventor: DEGERMANN, Michael, Steen, DK-6200 Aabenraa (DK)
(74) Representative: Sundien, Thomas
(86) International application number: PCT/DK2003/000415
(87) International publication number: WO 2004/000693

(56) References cited:
- GB-A- 2 210 396
- US-A- 5 642 827

## Description

The invention relates to a thermally insulated container for the transport of cargo, said container comprising panels comprising at least one outer layer or one wall and at least one inner layer or one wall, between which layers or walls foam material is arranged, the layers or walls being of metal and having a thickness in excess of 50 µm.

In connection with the transport of cargo where the temperature thereof is desired to assume a specified value, thermally insulated containers are used. This is the case eg during the transport of meat for human consumption and the like. In connection with such transport it is essence that the temperature is maintained, and therefore it is essential that the thermal conductivity of the container is minimal. It is known to use containers constructed from panels, whose walls can be made of eg metal, and between which a foam material is blown. Likewise, it is known to use containers with walls manufactured from a suitable plastics material, and between which a foam material is blown. In connection with the manufacture of these panels, polyurethane foam is typically used as foam material, and blowing agents are the ones available on the market. It is thus desirable to provide containers, where the thermal conductivity is minimal, while simultaneously environmentally acceptable blowing agent can be used.

It is also known that in case the selected insulation material comprises polyurethane foam with a closed cell structure, it contains a mixture of blowing-agent gas and at least one additive gas. The additive gas may comprise inert gases - eg argon - the coefficient of diffusion of which is lower than that of atmospheric air. Furthermore the foam may be rigid or semi-rigid.

It is thus the object of the present invention to provide a thermally insulated container, whose insulating properties are good and wherein the good thermal insulating properties are maintained, also over a number of years, the insulating properties of the panels remaining substantially unchanged over time.

This object is obtained with a thermally insulated container of the kind described above, and wherein the foam material is essentially a closed-cell foam material, said cells enclosing at least to gases, said gases having a thermal conductivity λ that is lower than that of atmospheric air, and wherein the gases comprise at least one blowing-agent gas and at least one additive gas and is present in the cells in a amount by weight corresponding to a closed interval corresponding to the ratio of 50:1 to 400:1.

The panels of the containers are thus manufactured in accordance with essentially known principles, but wherein other gases are used in connection with the provision of the polyurethane foam, such that the ready-hardened polyurethane foam on the one hand comprises a small cell structure constituted by closed cells, and wherein these closed cells incorporate the blowing agent used in the manufacture of the polyurethane foam and the additive gas used, viz. materials whose thermal conductivity properties are markedly inferior to that of atmospheric air. The ratio between the two gases - blowing agent and additive gas - will be within the closed interval of 50:1 to 400:1 percent by weight.

As a consequence of the foam material comprising, on the one hand, the closed cells, it is hence ensured that they are filled with these gases that have a low thermal conductivity. Since the walls are made of metal it is also ensured that no diffusion of the gas occurs as it has happened eg over a number of years when walls were built of plastics material, and likewise the small amounts of additive gas - preferably argon - optimise the insulating properties. Said percentage by weight corresponds to a percentage in volume of additive gas of 0.48-2.85 percent by volume and an optimal content being within the range of 0.6 percent by volume.

By providing a thermally insulated container according to the invention and as further featured in claim 2, convenient choice of foam is obtained and which is particularly suitable for precisely use for a container.

By providing a thermally insulated container according to the invention and as further featured in claim 3, a value for the thermal conductivity is accomplished that ensures a markedly superior insulation compared to those cases where the gas is enclosed in the cells and is constituted of atmospheric air.

By providing a thermally insulated container according to the invention as further featured in claim 4, a convenient choice of gas is accomplished.

By providing a thermally insulated container according to the invention as further featured in claim 5, a convenient choice of material is accomplished, which material is, on the one hand, diffusion proof and ensures good strength, since an aluminium alloy will primarily be used for coating the walls that face towards the container interior, and wherein a convenient steel alloy is used for coating the walls that face towards the surroundings.

By providing a thermally insulated container according to the invention and as further featured in claim 6, a convenient thickness of the insulating layer is accomplished, and also that it fills the entire space within the panel thereby eliminating the occurrence of heat bridges.

By providing a thermally insulated container according to the invention as further featured in claim 7, a rigid construction is accomplished, since said foam materials have carrying capacities that ensure that the panels have a good and convenient strength, while simultaneously it is ensured that the cell structure becomes the desired closed-cell structure.

By providing a thermally insulated container according to the invention as further featured in claim 8, a cell size is accomplished that ensures that the insulating properties are maintained, and that thus an optimal relation is accomplished between cell size and the selected gas.

By providing a thermally insulated container according to the invention and as further featured in claim 9 it is accomplished that the gas is retained in the cells and that consequently their insulating capacity is maintained. This is of significance when the walls are manufactured from a plastics material, whereas it is of no consequence when the surrounding walls are manufactured from metal.

By providing a thermally insulated container according to the invention and as recited in claims 10 and 11, a convenient choice of gas is accomplished.

The invention also relates to use of the thermally insulated container for being integrated/incorporated in a vehicle for providing a container vehicle/refrigerated vehicle. Hereby a refrigerated vehicle having good thermally insulating properties is obtained.

The invention will now be explained in further detail with reference to the drawing, wherein:
Figure 1 shows a plant for admixture of additive gas with the blowing-agent gas;
Figure 2 shows a thermally insulated container;
Figure 3 shows a sectional view of a panel for the construction of a thermally insulated container;
Figure 4 shows a sectional view of polyurethane foam with cells;
Figure 5 shows the thermal conductivity for selected material as a function of the temperature measured in a wall.

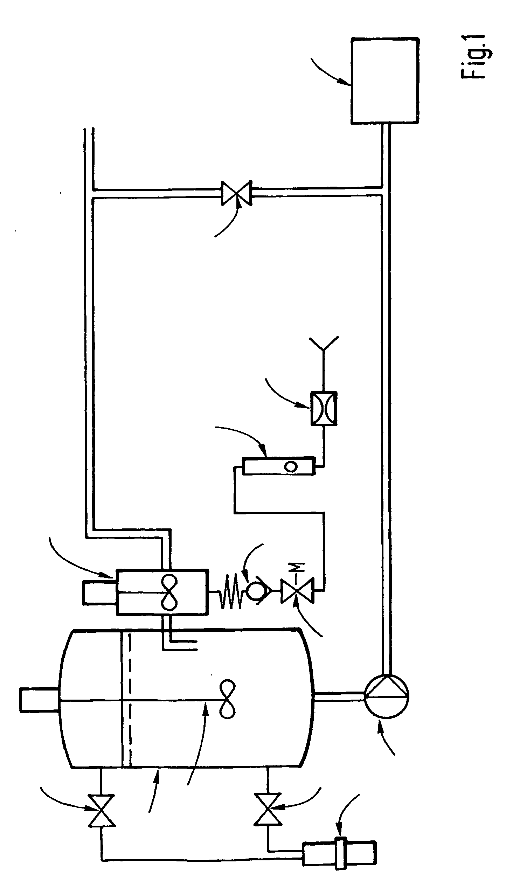

In connection with the manufacture of polyurethane foam for use in the manufacture of panels for containers a plant like the one shown in Figure 1 is used. In the context of this plant, argon is used for being blown into the emulsifier 4.

Argon is admixed with polyol in the emulsifier 4 which is, in reality, a radial-flow mixer taken from the low-pressure machine programme. The emulsifier 4 is to be mounted on a return conduit for a polyol tank 1 with influx of polyol at the side and discharge from a central opening in the bottom element of the tank 1. A stirrer 2 is located within the tank 1 as such. The argon used must be dry and free from oil, is conveyed to the emulsifier through a needle valve 8, a flow meter 7, a magnetic valve 6 and a non-return valve 5 in that sequence. The magnetic and non-return valves need to be mounted directly on the emulsifier.

Argon serves the purpose of forming a lot of very small bubbles in the polyol. In order to accomplish the best possible effect, the argon needs to be distributed as finely as possible in the polyol, which is accomplished by adding argon slowly (maximally 1.5-2 liters/minute read on the flow meter). Moreover improved insulating properties are accomplished.

When the polyol is nucleared with gas/air the polyol contains thousands of very small bubbles. These bubbles are compressed to nearly nothing when the polyol is advanced while under high pressure, 100-220 bar, to the nozzle in the mixer head 13. From here return conduits extend to the tank 1. The return conduit is closed during firing. When the polyol travels through the nozzle, a dramatic pressure drop occurs that more or less triggers an explosion of the gas bobbles. This causes the polyol to be finely divided and also that the turbulence in the mixer chamber is increased, both of which greatly enhance the mixer effect.

Moreover each bubble is the seed of a cell. Since there are a number of bubbles for the polyol in excess of the number cells normally present in the finished foam, more cells will be formed which necessarily means smaller cells.

The thus formed polyurethane foam is conveyed downwards onto a metal plate intended therefor, and where it is subsequently closed by means of a further metal plate arranged on top of it. The manufacture of such panel often takes place in accordance with fully known principles as such.

Pentan is used as blowing agent and is admixed with the polyol.

Thus, in the above-recited example argon was used as additive gas in order to enhance the nucleus formation, while pentan is used as blowing agent. In tables 1 and 2 examples of other blowing agents and other additive gases are given.

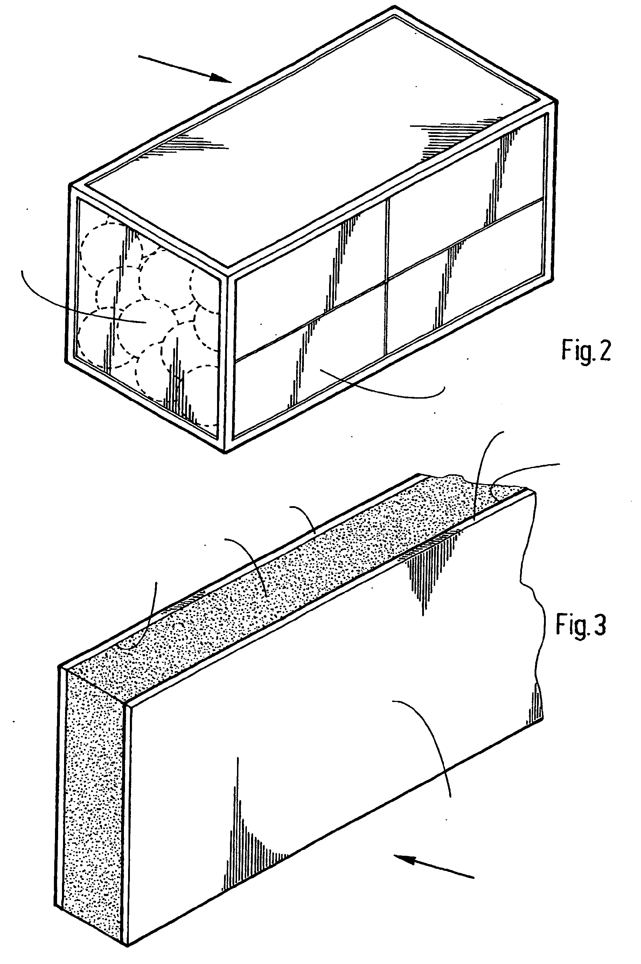

Thus, Figure 2 shows a container 101 constructed from a number of panels 103. The container has an inner cavity in which cargo is arranged. During transport, the cargo 102 needs to maintain a given temperature by means of a cooling device, the accomplishment of which is ensured by the heat-insulating panels 103.

Figure 3 thus shows a sectional view of a panel 103 constructed from two plane metal plates, an outer metal plate/outer metal coating 104 and an inner metal plate/inner metal coating 105. The inner metal plate 105 is typically manufactured from aluminium, while the outer metal plate is typically manufactured from a steel material. The metal plates have a minimum thickness of 50 µm to ensure that the plates are diffusion proof; in other words the gases, preferably pentan with argon, used in the manufacture of the polyurethane foam remain in the closed cells.

Besides, the plates are plane and arranged parallel in relation to each other with a distance of a minimum of 35 mm.

The outer metal plate 104 thus has an inner face 109 that faces towards the cavity provided by the two plate structures, while the inner metal plate 105 also has an inner face 110 facing towards the same cavity. This cavity is filled with preferably a polyurethane foam, and wherein the polyurethane foam fills the cavity 100% and has abutment on the full expanse of the inner faces.

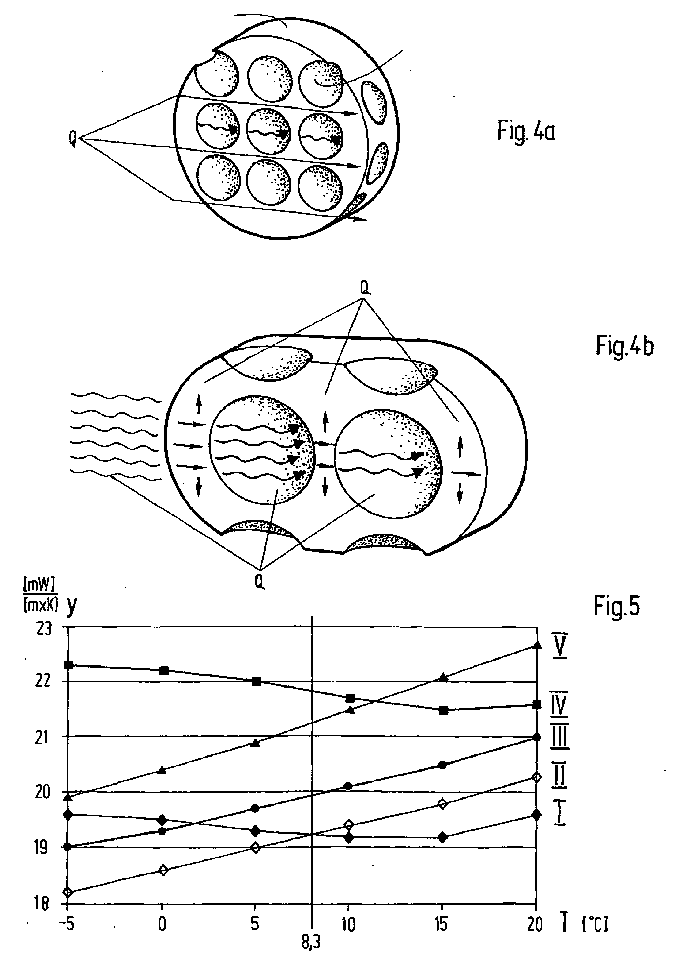

Figures 4A and 4B show a foam material 106 in which a number of cells 107 are provided. The average diameter of the cells is desired to be preferably less than 0.4 mm, and further less than 0.25 mm. Figure 4A shows small cells while Figure 4B shows large cells that are indeed closed, but wherein the problem is precisely that, other things being equal, the heat rays penetrate fewer cell walls when the cells are large compared to the one shown in Figure 4A, where there are many cell walls, and therefore there will also be a lower heat radiation Q in case of the large number of small cells. Likewise it is of essence that the cells are closed; in other words that they are on all sides cast integrally in the foam, the foam material used preferably being polyurethane foam. The gas in the cells 107 is preferably cyclopentan and CO₂ and argon, optionally admixed with other materials.

**Table 1**

| Additive gas | mW/m°K |
|---|---|
| Atmospheric air | 26.2 |
| Carbondioxide | 16.9 |
| Helium | 155.9 |
| Neon | 49.5 |
| Argon | 17.7 |
| Crypton | 9.5 |
| Xenon | 5.5 |

**Table 2**

| Blowing agent | mW/m°K |
|---|---|
| HFC-365mfc | 10.6 |
| HFC-245fa | 12.2 |
| Cyclopentan | 12.0 |
| n-pentan | 15.0 |
| HFC 134a | 14.9 |
| Iso-pentan | 13.8 |
| CH₃CCl₂F, HCFC 141 b | 9.4 |

Table 1 shows the thermal conductivity of various additive gasses, and it will appear that atmospheric air has a thermal conductivity of about 26.2 mW/m°K, whereas argon has a value of 17.7. Other gases that are also suitable, having low thermal conductivity, are eg crypton and xenon.

However, gases such as helium will have a far too high thermal conductivity, so will neon.

Examples of suitable blowing agents will appear from Table 2 with their associated values for thermal conductivity.

The correlation between the weight ratio and percent by volume for the preferred gases area as follows:

| Percent by volume | | | | |
|---|---|---|---|---|
| Weight ratio | 1:50 | 1:50 | 1:400 | 1:400 |
| Argon | 3% | - | 0.40 % | - |
| Crypton | - | 1 % | - | 0.20 % |
| CO₂ | 36% | 37 % | 36.90% | 37.00 % |
| Cyclopentan | 61% | 62 % | 62.70 % | 62.80 % |
| | 100 % | 100 % | 100.00 % | 100.00 % |

The blowing agent used is, as mentioned, preferably cyclopentan with argon as additive gas, where it may very well be admixed with other gases. The amount of closed cells should be within the order of a minimum of 90 % in order to achieve optimal insulation. In other words, the number of open cells may be up to 10 %. Likewise, it is essential that the gas used has a low coefficient of diffusion in the used foam material, which is thus preferably polyurethane, in those cases where the plates are manufactured from plastics material/plastics.

Now follows a description of a foam material according to the invention.

A rigid polyurethane foam was made using the following composition:

| **Polyol blend composition:** | **Part by weight [g]** |
|---|---|
| Polyol made from sucrose and propylene oxide, OHV=450 mg KOH/g | 71.6 |
| Polyethylene glycol, OHV=290 mg KOH/g | 10.0 |
| Polypropylene glycol, OHV=112 mg KOH/g | 5.0 |
| Polyol made from glycerol and propylene oxide, OHV=250 mg KOH/g | 9.0 |
| Amine mixture | 0.9 |
| Water | 2.0 |
| Stabilizer mixture | 1.5 |
| Cyclopentane | 13.0 |
| **Total** | **113.0** |
| **Polymeric MDI (DESMODUR 44V20) Total** | **145.0** |

The polyol blend was mixed with the polymeric MDI on a high pressure mixing head at 900 [g/sec]/160 [bar]/23 [°C] and introduced with a theoretical density of 48 [g/l] into a mould measuring 1500x860x70 [mm] held at 40 [°C] and kept there for 20 [min]. The argon was introduced into the polyol blend on the high pressure machine pipeline by an emulsifier at 5 [bar]/15 [NL/min]/8,000 [RPM] and the use of argon was controlled by a +/-1 [g] scale. Then the thermal conductivity of the polyurethane foam thus produced was tested after 24 [h] of conditioning on a Lasercomp according to ISO 8301.

### Results:

| | **REFERENCE** | **1** | **2** | **3** | **4** | **Unit** |
|---|---|---|---|---|---|---|
| Polyolblend | 98.00 | 98.00 | 98.00 | 98.00 | 98.00 | [g] |
| Water | 2.00 | 2.00 | 2.00 | 2.00 | 2.00 | [g] |
| Cyclopentane | 13.00 | 13.00 | 13.00 | 13.00 | 13.00 | [g] |
| Argon | - | 0.06 | 0.09 | 0.15 | 0.22 | [g] |
| P-MDI | 145.00 | 145.00 | 145.00 | 145.00 | 145.00 | [g] |

| **Weight percent of cell gas** | | | | | | |
|---|---|---|---|---|---|---|
| CO₂ | 27.1 | 27.2 | 27.2 | 27.1 | 27.0 | [w/w%] |
| Cyclopentane | 72.9 | 72.4 | 72.3 | 72.1 | 71.8 | [w/w%] |
| Argon | - | 0.4 | 0.5 | 0.8 | 1.2 | [w/w%] |

| **Volume percent of cell gas** | | | | | | |
|---|---|---|---|---|---|---|
| CO₂ | 37.4 | 37.2 | 37.2 | 37.0 | 36.8 | [vol%l |
| Cyclopentane | 62.6 | 62.2 | 62.0 | 61.8 | 61.4 | [vol%] |
| Argon | - | 0.6 | 0.8 | 1.2 | 1.8 | [vol%] |

| Thermal conductivity (+10 [°C] average temperature) | | | | | | |
|---|---|---|---|---|---|---|
| Lambda value | 20.4 | 119.8 | 120.2 | 20.4 | 20.5 | [mW/mK]i |

As an alternative to argon, atmospheric air has been introduced into the polyol blend with the amount being approx. 1 [vol%] under same conditions as argon. The thermal conductivity of the foam was tested after 24 [h] of conditioning on a Lasercomp according to ISO 8301. The lambda value was found to be 21.6 [mW/mK].

Below is another test made with pentan-blown foam, to which argon was added:

### Tests with pentan-blown foam with argon added

In laboratory test panels were made to investigate the effect of added argon on the insulating properties. Measurements based on laboratory tests show the correlation between the average wall temperature of 8.3°C and the insulating properties for the various relevant foam systems. See Figure 5.

The thermal conductivity is the lambda value for HCFC141b-, HFC 365/227, water-, pentan- and pentan/argon-blown polyurethane foam with a density of 42-44 (g/l).

It will appear that the pentan/argon system has increased insulating capacity at mean wall temperatures below 10°C, but increased at mean wall temperatures above same.

It should be noted that the graphs shown in Figure 5 are coded in accordance with the following:
I: 141 b; II: pentan/argon; III: pentan; IV: 365/227; V: water.

The values along the X-axis are °C, while the values along the Y-axis are mW/m°K.

As mentioned, other gases can be used; for instance, carbon dioxide is also used along with cyclopentan and argon or crypton on one of the remaninig, mentioned gases, and wherein the essential aspect is thus that an amount is used of a gas having low thermal conductivity; that the cells in the polyurethane foam are small and are closed cells; and that the properties with regard to thermal conductivity are low. Moreover, it may be expedient if the selected gas is an inert gas, thereby reducing the risk of fire during the manufacture of the foam material.

The foam material used is primarily rigid or semi-rigid foam.

The described thermally insulated container can be used, as it is and be charged with miscellaneous cargoes, for which it is desired to maintain a given and optimal temperature during transport. The mode of transport may be a loading of said containers onto vessels or railway vehicles.

The containers can also be incorporated in lorries in such a manner that the containers are integrated, whereby a refrigerated lorry is obtained for the transport of cargo on the highways.

## Claims

1. A thermally insulated container (101) for the transport of cargo (102), said container (101) comprising panels (103) comprising at least one outer layer/wall (104) and at least one inner layer/wail (105), between which layers/walls foam material (106) is arranged all the layers/walls (104, 105), being of metal and having a thickness in excess of 50 µm, **characterised in that** the foam material is an essentially closed cell foam material, said cells (107) enclosing at least two gases (108), said gases (108) having a value A for thermal conductivity which is lower than that of atmospheric air; and that the gases comprise at least one blowing-agent gas and at least one additive gas and are present in the cells in an amount by weight corresponding to a closed interval corresponding to the ratio of 50:1 to 400:1.

2. A thermally insulated container according to claim 1, **characterised in that** the foam material (106) is a polyurethane foam.

3. A thermally insulated container according to claim 1 or 2, **characterised in that** the value for thermal conductivity is, at least for the additive gas, less than 20 mW/m°K.

4. A thermally insulated container according to any one of the preceding claims, **characterised in that** the additive gas comprises an inert gas, eg argon.

5. A thermally insulated container according to any one of the preceding claims, **characterised in that** the layers/walls (104, 105) are manufactured from a steel alloy and/or an aluminium alloy.

6. A thermally insulated container according to any one of the preceding claims, **characterised in that** the distance between the inner layer (105) and the outer layer (104) is at least 35 mm; and that the cavity between the plane parallel inner and outer layers/walls is filled with foam material, said material being in contact with both layers/walls and faces facing towards the foam material (106) and in the entire expanse there of.

7. A thermally insulated container according to any one of the preceding claims, **characterised in that** the foam material (106) is a rigid or a semi-rigid foam material.

8. A thermally insulated container according to any one of the preceding claims, **characterised in that** the average diameter of the cells is less than 0.4 mm, preferably less than 0.25 mm.

9. A thermally insulated container according to any one of the preceding claims, **characterised in that** the coefficient of diffusion of the foam material is less than that of atmospheric air.

10. A thermally insulated container according to any one of the preceding claims, **characterised in that** the blowing-agent gas comprises cyclopentan.

11. A thermally insulated container according to any one of the preceding claims, **characterised in that** one of the gases comprises CO₂.

12. Use of a thermally insulated container according to any one of the preceding claims for being integrated with/incorporated in a vehicle for providing a container vehicle/refrigerated lorry.

## Patentansprüche

1. Wärmeisolierter Behälter (101) für den Transport von Frachtgut (102), wobei der Behälter (101) Paneele (103) umfasst, die mindestens eine äußere Schicht/Wand (104) und mindestens eine innere Schicht/Wand (105) enthalten, zwischen denen Schaummaterial (106) angeordnet ist, wobei die Schichten/Wände (104, 105) aus Metall bestehen und eine Dicke von mehr als 50 µm haben, **dadurch gekennzeichnet, dass** das Schaummaterial ein im Wesentlichen geschlossenzelliges Schaummaterial ist, wobei die Zellen (107) mindestens zwei Gase (108) einschließen, die einen Wert λ für die Wärmeleitfähigkeit haben, der geringer als der von Atmosphärenluft ist, und dass die Gase mindestens ein Treibmittelgas und mindestens ein Additivgas umfassen und in den Zellen in einer auf das Gewicht bezogenen Menge vorhanden sind, die einem geschlossenen, dem Verhältnis 50:1 bis 400:1 entsprechenden Bereich entspricht.

2. Wärmeisolierter Behälter nach Anspruch 1, **dadurch gekennzeichnet, dass** das Schaummaterial (106) ein Polyurethanschaum ist.

3. Wärmeisolierter Behälter nach Anspruch 1 oder 2, **dadurch gekennzeichnet, dass** der Wert für die Wärmeleitfähigkeit zumindest für das Additivgas weniger als 20 mW/m°K beträgt.

4. Wärmeisolierter Behälter nach einem der vorstehenden Ansprüche, **dadurch gekennzeichnet, dass** das Additivgas ein Inertgas, z.B. Argon umfasst.

5. Wärmeisolierter Behälter nach einem der vorstehenden Ansprüche, **dadurch gekennzeichnet, dass** die Schichten/ Wände (104, 105) aus einer Stahllegierung und/oder einer Aluminiumlegierung gefertigt sind.

6. Wärmeisolierter Behälter nach einem der vorstehenden Ansprüche, **dadurch gekennzeichnet, dass** der Abstand zwischen der inneren Lage (105) und der äußeren Lage (104) mindestens 35 mm beträgt und dass der Raum zwischen den planparallelen inneren und äußeren Lagen/Wänden mit Schaummaterial gefüllt ist, das sich mit sowohl Schichten/Wänden als auch dem Schaummaterial (106) zugewandten Flächen und über ihre gesamte Ausdehnung in Kontakt befindet.

7. Wärmeisolierter Behälter nach einem der vorstehenden Ansprüche, **dadurch gekennzeichnet, dass** das Schaummaterial (107) ein festes oder halbfestes Schaummaterial ist.

8. Wärmeisolierter Behälter nach einem der vorstehenden Ansprüche, **dadurch gekennzeichnet, dass** der mittlere Durchmesser der Zellen weniger als 0,4 mm, vorzugsweise weniger als 0,25 mm beträgt.

9. Wärmeisolierter Behälter nach einem der vorstehenden Ansprüche, **dadurch gekennzeichnet, dass** der Diffusionskoeffizient des Schaummaterials kleiner als der von Atmosphärenluft ist.

10. Wärmeisolierter Behälter nach einem der vorstehenden Ansprüche, **dadurch gekennzeichnet, dass** das Treibmittelgas Cyclopentan umfasst.

11. Wärmeisolierter Behälter nach einem der vorstehenden Ansprüche, **dadurch gekennzeichnet, dass** eines der Gase CO₂ umfasst.

12. Verwendung eines wärmeisolierten Behälters gemäß einem der vorstehenden Ansprüche, um in einem Fahrzeug integriert/eingebaut zu werden, um ein Containerfahrzeug/ einen Kühllastwagen zur Verfügung zu stellen.

## Revendications

1. Conteneur (101) à isolation thermique pour le transport de marchandises (102), ledit conteneur (101) comprenant des panneaux (103) comprenant au moins une couche/paroi extérieure (104) et au moins une couche/paroi intérieure (105), couches/parois entre lesquelles un matériau en mousse (106) est placé, les couches/parois (104, 105) étant constituées de métal et ayant une épaisseur supérieure à 50 *µ*m, **caractérisé en ce que** le matériau en mousse est un matériau en mousse à cellules essentiellement fermées, lesdites cellules (107) renfermant au moins deux gaz (108), lesdits gaz (108) ayant une valeur de conductibilité thermique λ qui est inférieure à celle de l'air atmosphérique, et **en ce que** les gaz comprennent au moins un gaz agent de soufflage et au moins un gaz additif et sont présents dans les cellules en une quantité en poids qui correspond à un intervalle fermé correspondant à un rapport de 50:1 à 400:1.

2. Conteneur à isolation thermique selon la revendication 1, **caractérisé en ce que** le matériau en mousse (106) est une mousse de polyuréthane.

3. Conteneur à isolation thermique selon la revendication 1 ou 2, **caractérisé en ce que** la valeur de la conductibilité thermique λ est, au moins pour le gaz additif, inférieure à 20 mW/m°K.

4. Conteneur à isolation thermique selon l'une quelconque des revendications précédentes, **caractérisé en ce que** le gaz additif comprend un gaz inerte, par exemple de l'argon.

5. Conteneur à isolation thermique selon l'une quelconque des revendications précédentes, **caractérisé en ce que** les couches/parois (104, 105) sont fabriquées dans un alliage d'acier et/ou dans un alliage d'aluminium.

6. Conteneur à isolation thermique selon l'une quelconque des revendications précédentes, **caractérisé en ce que** la distance entre la couche intérieure (105) et la couche extérieure (104) vaut au moins 35 mm, et **en ce que** la cavité entre les couches/parois intérieurs et extérieures planes parallèles est rempli de matériau en mousse, ledit matériau étant en contact avec à la fois les couches/parois et les faces tournées vers le matériau en mousse (106) et dans toute son extension.

7. Conteneur à isolation thermique selon l'une quelconque des revendications précédentes, **caractérisé en ce que** le matériau en mousse (106) est un matériau en mousse rigide ou semi-rigide.

8. Conteneur à isolation thermique selon l'une quelconque des revendications précédentes, **caractérisé en ce que** le diamètre moyen des cellules est inférieur à 0,4 mm, de préférence inférieur à 0,25 mm.

9. Conteneur à isolation thermique selon l'une quelconque des revendications précédentes, **caractérisé en ce que** le coefficient de diffusion du matériau en mousse est inférieur à celui de l'air atmosphérique.

10. Conteneur à isolation thermique selon l'une quelconque des revendications précédentes, **caractérisé en ce que** le gaz agent de soufflage contient du cyclopentane.

11. Conteneur à isolation thermique selon l'une quelconque des revendications précédentes, **caractérisé en ce que** l'un des gaz comprend du CO₂.

12. Utilisation d'un conteneur à isolation thermique selon l'une quelconque des revendications précédentes pour l'intégrer/incorporer avec/dans un véhicule pour former un véhicule conteneur/camion réfrigéré.
